# EUROPEAN PATENT SPECIFICATION

(11) **EP 3 786 085 B1**
(45) Date of publication and mention of the grant of the patent: **01.05.2024**
(21) Application number: 18886393.0
(22) Date of filing: 25.07.2018
(51) Int. Cl.: B25J 5/00, B65G 1/04, B65G 1/10, B65G 1/137, B66F 9/06, B66F 9/14

(54) **CONVEYING SYSTEM AND CONVEYING METHOD WITH A FIRST ROBOT AND A SECOND ROBOT**
FÖRDERSYSTEM UND FÖRDERVERFAHREN MIT EINEM ERSTEN ROBOTER UND EINEM ZWEITEN ROBOTER
SYSTÈME DE CONVOYAGE ET MÉTHODE DE CONVOYAGE AVEC UN PREMIER ROBOT ET UN SECOND ROBOT

(30) Priority: 26.04.2018 CN 201810390950; 26.04.2018 CN 201810390093; 26.04.2018 CN 201810391026
(43) Date of publication of application: 03.03.2021
(73) Proprietor: Beijing Geekplus Technology Co., Ltd., Beijing 100102 (CN)
(72) Inventor: LI, Hongbo, Beijing 100102 (CN); HU, Bin, Beijing 100102 (CN); SUN, Langlang, Beijing 100102 (CN)
(74) Representative: Dennemeyer & Associates S.A.
(86) International application number: PCT/CN2018/097038
(87) International publication number: WO 2019/109644

(56) References cited:
- EP-A1- 3 192 616
- EP-A2- 0 302 205
- WO-A2-2015/074755
- CN-A- 105 600 263
- CN-A- 106 185 151
- CN-A- 107 472 792
- CN-U- 208 150 248
- CN-U- 208 150 249
- GB-A- 2 080 265
- JP-A- 2012 236 683
- US-A1- 2015 032 252
- US-A1- 2015 073 589
- US-A1- 2017 166 399

## Description

The application claims the priorities of Chinese Patent Applications No. 201810390950.8, No. 201810390093.1 and No. 201810391026.1 filed on April 26, 2018.

### Field

The present invention relates to the field of intelligent logistics technology, more especially to a conveying system and to a conveying method.

### Background

The rapid development of e-commerce and online shopping has brought the unprecedented development opportunities to the logistics warehousing industry, and has also proposed severe challenges for express delivery services. In the logistics warehousing industry, the traditional manual sorting method is that an operator pushes a trolley with form containers, finds the articles corresponding to the forms one by one in the warehouse according to the forms (for example, orders) and loads them into the form containers corresponding to the forms. Such sorting method requires the operator to walk a lot with large labor intensity, low efficiency and high error rate.

On this basis, an automatic sorting system based on intelligent convey robots has been developed in recent years. According to the form requirements and inventory information, the robot conveys the target shelf loaded with the goods corresponding to the form to the corresponding sorting station, and the operator at the sorting station picks the goods into the designated container according to the prompt. After the sorting task is completed, the robot returns the shelf to the designated location. Such sorting method has the improved efficiency and accuracy compared with the manual method.

In order to adapt to the robot convey, the precision and stability of the shelf must meet the higher requirements. Therefore, the shelf in each usage scenario needs to be customized according to the size and operating environment of the robot, so as to increase the system implementation cost. At the same time, since each sorting activity has to convey the entire shelf, a large number of unwanted goods are also conveyed together, and the robot has the low conveying efficiency and wastes energy consumption.
Patent application document EP3192616A1 discloses a robot adapted to pick up and transport objects including a base plate, a drive unit, a pick up unit and a shelf unit, where the drive unit, the pick up unit and the shelf unit are positioned on the base plate.

Document US 2015073589 A1 and document US 2017166399 A1 both disclose a conveying system and a conveying method involving a first robot with a gripping apparatus and a second robot connected to a temporary buffer.

### Summary

The present invention provides a conveying system including: a first robot and a second robot; where: the first robot is configured to move to an article storage apparatus, grip a first target article at the article storage apparatus and place the first target article on a movable temporary buffer apparatus or grip a second target article on the movable temporary buffer apparatus and place the second target article on the article storage apparatus; and the second robot is connected to the temporary buffer apparatus and moves following the first robot. The first robot includes a gripping apparatus configured to adjust a gripping height to grip the first target article located in any interlayer on the article storage apparatus or the second target article located in any interlayer on the temporary buffer apparatus, and place the first target article in any interlayer of the temporary buffer apparatus or place the second target article in any interlayer of the article storage apparatus. The gripping apparatus includes a telescopic component configured to grip the first target article or the second target article. The gripping apparatus further includes a lifting component connected to the telescopic component and configured to raise or lower the telescopic component to a preset height. The telescopic component includes a clamping part, the clamping part being slidably connected to the sliding part; the clamping part is configured to grip the second target article from the temporary buffer apparatus or grip the first target article from the article storage apparatus by way of clamping, where the clamping part slides in a depth direction of interlayers of the temporary buffer apparatus or the article storage apparatus through the sliding part.

According to an implementation of an embodiment of the present 2. invention, the temporary buffer apparatus is located on the second robot, or the second robot drags the temporary buffer apparatus with wheels.

According to an implementation of an embodiment of the present invention, the first robot moves according to a navigational walking path, and the second robot automatically follows the first robot based on a lidar target tracking technology; or the first robot and the second robot move according to a same navigational walking path respectively.

According to an implementation of an embodiment of the present invention, after the temporary buffer apparatus is filled up or the first robot has placed all first target articles to be gripped in the temporary buffer apparatus, the second robot moves to a preset position by itself according to a navigational walking path.

According to an implementation of an embodiment of the present invention, the clamping part includes a first gripper and a second gripper, the first gripper and the second gripper being oppositely arranged on left and right sides of the telescopic component.

According to an implementation of an embodiment of the present invention, the first gripper and the second gripper are both plate-shaped structures.

According to an implementation of an embodiment of the present invention, the sliding part is a guide rail.

According to an implementation of an embodiment of the present the lifting component is a linear bearing.

According to an implementation of an embodiment of the present invention, the first target article includes a storage container loaded with goods or the goods itself; and the second target article includes a storage container loaded with goods or the goods itself.

According to an implementation of an embodiment of the present invention, the storage container includes a container identifier, and the first robot identifies the storage container through the container identifier.

The present invention also provides a conveying method including: a first robot moves to an article storage apparatus; a second robot that moves following the first robot moves to the article storage apparatus following the first robot, where the second robot is connected with a temporary buffer apparatus; the first robot grips a first target article from the article storage apparatus and places the first target article on the temporary buffer apparatus, or grips a second target article from the temporary buffer apparatus and places the second target article on the article storage apparatus. The first robot grips a first target article from the article storage apparatus and places the first target article on the temporary buffer apparatus, including: the first robot grips the first target article from the article storage apparatus through a gripping apparatus provided on the first robot and places the first target article on the temporary buffer apparatus. The gripping apparatus includes a telescopic component configured to grip the first target article or the second target article and a lifting component connected to the telescopic component and configured to raise or lower the telescopic component to a preset height; wherein the telescopic component comprises a clamping part and a sliding part, the clamping part being slidably connected to the sliding part. The first robot grips the first target article from the article storage apparatus through the gripping apparatus provided on the first robot and places the first target article on the temporary buffer apparatus, including: the first robot faces to the article storage apparatus, and adjusts a height of the gripping apparatus to a height of an interlayer of the article storage apparatus where the first target article is located through the lifting component; the first robot grips the first target article from the article storage apparatus through the gripping apparatus via the clamping part by way of clamping; the first robot faces to the temporary buffer apparatus, and adjusts a height of the gripping apparatus to the height of a designated interlayer of the temporary buffer apparatus through the lifting component; the first robot places the first target article on the designated interlayer of the temporary buffer apparatus through the gripping apparatus via the clamping part by way of clamping. Where the clamping part slides in a depth direction of interlayers of the temporary buffer apparatus or the article storage apparatus through the sliding part.

### Brief Description of the Drawings

Fig. 1 is a schematic diagram of a robot which is not according to the invention;
Fig. 2 is a schematic diagram of an article storage apparatus which is not according to the invention;
Fig. 3 is a schematic diagram of another robot which is not according to the invention;
Fig. 4 is a schematic flowchart of a conveying method based on a sorting scenario which is not according to the invention;
Fig. 5 is a schematic diagram of another robot prov which is not according to the invention;
Fig. 6 is a schematic diagram of yet another robot which is not according to the invention;
Fig. 7 is a schematic flowchart of a conveying method based on a replenishment scenario which is not according to the invention;
Fig. 8 is a schematic flowchart of a method for assigning a corresponding storage container to a robot which is not according to the invention;
Fig. 9 is a schematic flowchart of another method for assigning a corresponding storage container to a robot which is not according to the invention;
Fig. 10 is a schematic diagram of a conveying system based on storage containers and temporary goods shelves provided by an embodiment of the present invention;
Fig. 11 is a structural schematic diagram of a second robot provided by an embodiment of the present invention;
Fig. 12 is a structural schematic diagram of a storage shelf provided by an embodiment of the present invention;
Fig. 13 is a schematic diagram of a first robot approaching a storage shelf provided by an embodiment of the present invention;
Fig. 14 is a structural schematic diagram of a first robot provided by an embodiment of the present invention;
Fig. 15 is a schematic flowchart of a conveying method based on storage containers and temporary goods shelves provided by an embodiment of the present invention.

### Detailed Description

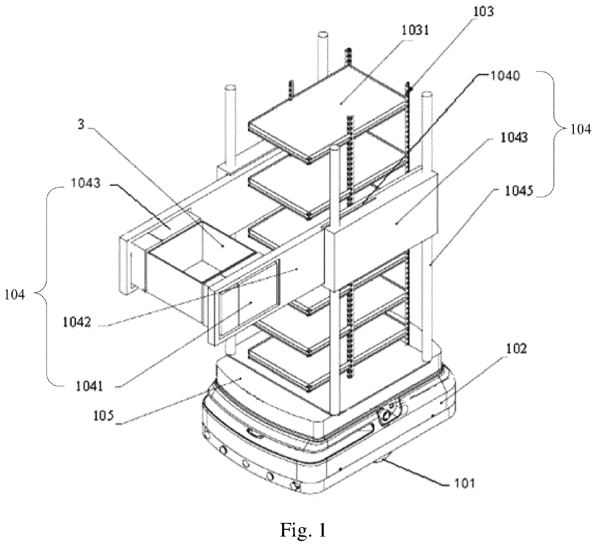

Embodiments of the present invention will be described below with reference to the drawings. It is noted that FIG. 1 - FIG. 9 are not according to the invention.

The embodiments described herein are merely a part of the embodiments of the present invention but not all the embodiments.

Referring to Fig. 1, which is not according to the invention, a robot is provided (for example, a conveying equipment, which will be used for description hereafter) including a walking apparatus 101, a body 102, an accommodating apparatus 103 and an article gripping apparatus 104.

The walking apparatus 101 is a motion component of the conveying equipment. As an example, the walking apparatus 101 may include one or more wheels, and move the conveying equipment by rolling of the wheels. The walking apparatus 101 may be arranged at the bottom of the conveying equipment, or the walking apparatus 101 may be arranged at other parts of the conveying equipment.

The conveying equipment can communicate with the back-end server, where the communication method may be wired or wireless. By communicating with the back-end server, the conveying equipment can be informed of the conveying task of the article, where the conveying task includes the walking path (which contains one or more coordinate points) assigned to the conveying equipment and the specific ID identifier of the target article (for example, article number, or the like). The walking apparatus 101 automatically proceeds to a preset position based on the walking path of the conveying equipment, where the preset position may be the location of the target article or the location of the work area or the like.

The body 102 is an integral support member of the conveying equipment. As a case, the body 102 is arranged over the walking apparatus 101, and the body 102 is configured to support the conveying equipment.

In order to facilitate conveying the articles, the accommodating apparatus 103 for placing one or more articles is arranged on the conveying equipment, where the accommodating apparatus 103 is arranged on the body 102 and includes a plurality of accommodating positions 1031, for example, the accommodating positions 1031 are the vertically stacked interlayers, and each accommodating position can accommodate at least one target article.

After the walking apparatus 101 transports the conveying equipment to the preset position, the article gripping apparatus 104 automatically grips the target article. For example, in the sorting scenario, the article gripping apparatus 104 grips the target article from the article storage apparatus corresponding to the preset position and automatically places the gripped target article in the accommodating position 1031 of the accommodating apparatus 103 (e.g., on any interlayer in the accommodating apparatus) based on the article gripping task received by the conveying equipment. For example, in the replenishment scenario, the article gripping apparatus 104 grips the target article from the accommodating position 1031 of the accommodating apparatus 103 (e.g., any interlayer in the accommodating apparatus) and places the gripped target article in the article storage apparatus corresponding to the preset position based on the article gripping task received by the conveying equipment.

As a case, the article conveying task received by the conveying equipment may instruct to convey multiple target articles, and the conveying equipment acquires multiple target articles from one or more article storage apparatus according to the walking path, where the walking path may be notified to the conveying equipment after being planned by the back-end server, or may be determined by the conveying equipment after being planned by itself.

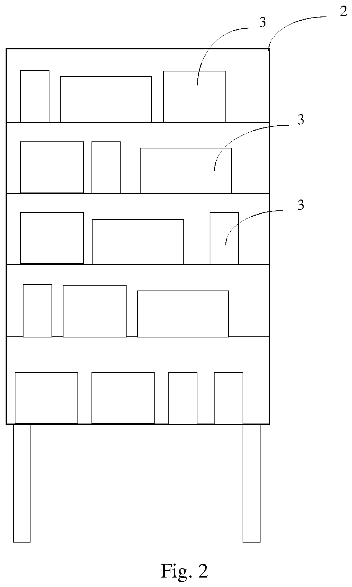

The article storage apparatus may be any apparatus capable of storing articles. As an example, referring to Fig. 2, which is not according to the invention, the article storage apparatus may be a shelf 2. Fig. 2 is a schematic diagram of an article storage apparatus provided by the present disclosure, where the shelf 2 stores articles 3. In an embodiment, the shelf 2 includes a plurality of interlayers, each of the interlayers can accommodate one or more articles 3. The article 3 may be a product on the shelf or a storage container that can hold one or more products on the shelf.

Furthermore, in an embodiment, the article 3 may also be hung from a hook or a rod in or on the shelf 2. The article 3 can be placed on the inner or outer surface of the shelf on the shelf 2 in any suitable manner. The shelf 2 can be rolled, carried or otherwise conveyed by the conveying equipment. In order to facilitate the conveying equipment to convey the shelf 2, the shelf 2 includes one or more shelf supports and a shelf identification point for identifying the shelf identity, and the article storage system may include any suitable number of shelves.

The article 3 represents any article suitable for storing, sorting or transferring in an automated inventory, warehouse, manufacturing and/or part processing system, may be any material, and may be a living or inanimate object. As an example, the article 3 may represent a commodity stored in the warehouse. The conveying equipment may retrieve the designated shelf 2 that contains the specific article 3 associated with the customer order to be packaged for delivery to the customer or other party.

As another example, the article 3 may represent the luggage stored in the luggage facility at the airport. The conveying equipment may retrieve the shelf 2 containing the luggage to be transported and tracked. This may include: selecting specific luggage articles for explosive screening, moving the luggage articles associated with flights that have switched gates, or removing the luggage articles belonging to the passengers who have missed flights.

As yet another example, the article 3 may represent each component of the manufacturing kit. In an embodiment, these components may represent components intended to be included in an assembled product, e.g., computer components used to customize a computer system. In such an embodiment, the conveying equipment may retrieve the specific components identified by the specifications related to the customer's order.

As yet another example, the article 3 may represent a person. For example, in the hospital environment, the shelf 2 may represent a bed containing a specific patient. Therefore, the article storage system may be configured to provide a safe and effective system for moving the hospital beds, which limits the possibility of patient injuries and reduces the possibility of errors due to human error. In short, the article 3 may be any suitable article suitable for storage on the shelf 2 in any suitable form.

The article gripping apparatus 104 may be implemented in various ways. Referring to Fig. 1, according to a specific implementation of the present disclosure, the article gripping apparatus 104 includes a telescopic component 1042 that grip the target article from the article storage apparatus. In order to cooperate with the telescopic component 1042, referring to Fig. 1, the article gripping apparatus 104 may further include a telescopic support 1043 configured to support the telescopic component 1042.

The heights of the target articles in the article storage apparatus are often different. In order to be able to place the target articles with different heights in the accommodating positions, according to an implementation of the present disclosure, application, the article gripping apparatus 104 includes a lifting component 1045 that raises or lowers the telescopic component 1042 to the height matching with the target article, where the lifting component 1045 may be any apparatus capable of lifting the height. As an optional embodiment, the lifting component may be a linear bearing.

The telescopic component 1042 may grip the articles in various ways. Referring to Fig. 1, according to an implementation of the present disclosure, the telescopic component 1042 includes a clamping part 1041 that grip the target article from the article storage apparatus or grip the target article from the accommodating position of the accommodating apparatus by way of clamping. The telescopic component 1042 further includes a sliding part 1040 connected to the clamping part 1041, where the clamping part 1041 slides in the depth direction of the interlayers through the sliding part 1040. As an optional embodiment, the sliding part 1040 may be a guide rail.

According to an implementation of the present disclosure, referring to Fig. 1, the clamping part 1041 includes two grippers: a first gripper and a second gripper, which are oppositely arranged on left and right sides of the interlayers. The two grippers may be plate-like structures or other shapes, such as rod-like structures. The shape of the plate-like structure may be rectangular (including square), circular or other shapes. The heights of the first gripper and the second gripper may match with the height of the interlayer. In an embodiment, both the height of the first gripper and the height of the second gripper are not higher than the height of the interlayer.

The clamping part further includes fasteners 1043 arranged respectively inside the first gripper and the second gripper, where the fasteners 1043 are foldable, the fasteners 1043 are folded when the clamping part 1041 does not grip the target article, and the fasteners 1043 expand when the clamping part 1041 grips the target article. The fasteners 1043 are configured to fasten the target article when the target article is gripped, to prevent the target article from sliding down between the first gripper and the second gripper.

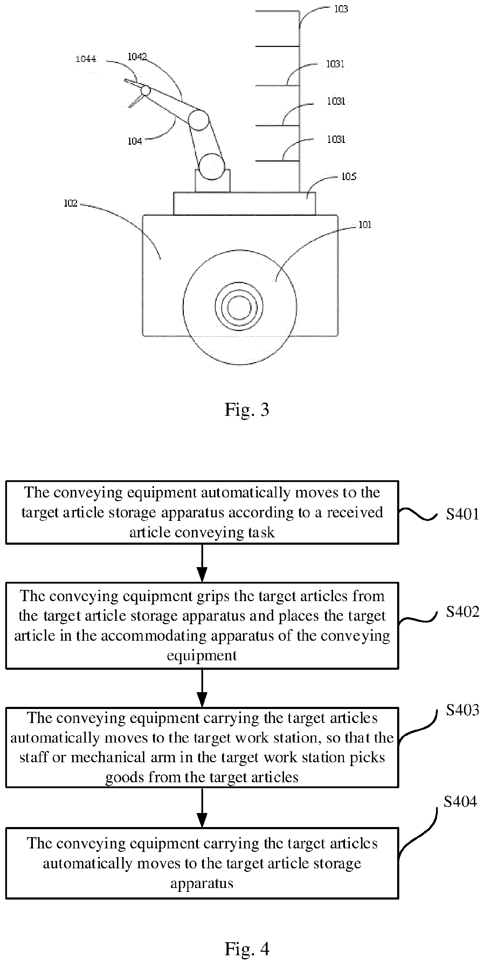

In addition to gripping the target article by way of clamping, referring to Fig. 3, which is not according to the invention, according to another implementation of the present disclosure, the telescopic component 1042 includes a gripper part 1044 that grips the target article from the article storage apparatus or grips the target article from the accommodating position of the accommodating apparatus by way of grippers. The gripper part 1044 is set to be in the contracted state when the conveying equipment does not perform the task, and is set to be in the open state when performing the task.

As shown in Fig. 1, according to another specific implementation of the present disclosure, the lifting component 1045 performs the contraction/expansion operation based on the height of the target article. When the lifting component 1045 performs the expansion operation, the lifting component raises the height; and when the lifting component 1045 performs the contraction operation, the lifting component lowers the height.

According to another specific implementation of the present disclosure, the telescopic component 1042 includes a fork part that grips the target article from the article storage apparatus corresponding to the preset position by way of forking. The fork part may be implemented by using a variety of mechanical structures with the forking function, which will not be repeated here.

In the process of gripping articles, the article gripping apparatus 104 can adjust the posture based on the actual needs. Referring to Figs. 1 and 3, according to an implementation of the present disclosure, the conveying equipment further includes: a rotating component 105 on which the accommodating apparatus 103 and the article gripping apparatus 104 are arranged.

According to an implementation of the present disclosure, during the movement of the conveying equipment from the starting point of the task to the preset position, the lifting component 1045 and the rotating component 105 automatically adjust to the postures matching with gripping the target article. In this way, the conveying equipment can automatically adjust the posture before gripping the target article, reducing the time of gripping the target article.

As an example, when extracting the target article (e.g., goods), the conveying equipment walks to a predetermined position by scheduling. During the walking process, the rotating component 105 and the lifting component 1045 work together to rotate the shelf on the conveying equipment by 90°. The rotation direction of the shelf depends on the position direction of the gripped goods (for example: target article), and the lifting height of the lifting component 1045 depends on the position height of the gripped goods. Then the telescopic component 1042 works and extends, and extends the clamping part 1041 to the cooperative position corresponding to the material box of the gripped goods. Then the clamping part 1041 clamps the material box for placing the goods, and then the lifting component 1045 works to lift the material box of the article, and the telescopic component 1042 works and puts the article on the shelf interlayer with the height corresponding to the goods quickly. Then the conveying equipment receives the system instruction and starts to go to the next place. The rotating component 105 works while the conveying equipment is walking, so that the forward direction of the shelf is consistent with the forward direction of the conveying equipment, and then one or more components work to place the material box for placing the goods on the shelf interlayer scheduled by the system. During this process, the conveying equipment is on the way to the next pickup location.

The article gripping apparatus 104 of the present application may take out two or more target articles and place them on the article storage apparatus, and then transport multiple target articles together to the designated location, thereby maximizing the efficiency.

Regarding the conveying equipment provided by the present disclosure, the conveying equipment is automatically transported to the preset destination through the walking apparatus, and one or more accommodating positions arranged on the body can carry and convey the target articles gripped by the article gripping apparatus. Compared with the traditional method of conveying the entire shelf, the robot can selectively grip a certain storage container loaded with goods or certain goods on the shelf to be conveyed instead of the entire shelf, thereby improving the hit rate of article sorting.

Corresponding to the above conveying equipment, and using the conveying equipment referring to Fig. 4, which is not according to the invention, the present disclosure provides a sorting method based on the sorting scenario, including the following steps.

S401: the conveying equipment automatically moves to the target article storage apparatus according to a received article conveying task.

S402: the conveying equipment grips the target articles from the target article storage apparatus and places the target article in the accommodating apparatus of the conveying equipment.

Here, the target article may be a storage container. The conveying equipment can communicate with the back-end server, where the communication method may be wired or wireless. By communicating with the back-end server, the conveying equipment can be informed of the conveying task of the article, where the conveying task includes a walking path (which contains one or more coordinate points) assigned to the conveying equipment and the specific ID identifier of the target article (for example, article number, etc.). The conveying equipment identifies the target article to be gripped from the target article storage apparatus according to the ID identifier of the target article, and grips the target article. In addition, each interlayer of the target article storage apparatus may be provided with an interlayer ID identifier. According to the interlayer ID identifier, the conveying equipment may further determine which interlayer of the target article storage apparatus the height of the article gripping apparatus reaches, and thus can grip the target article from the predetermined interlayer of the target article storage apparatus. Therefore, in this case, the article conveying task also includes the interlayer ID identifier.

The accommodating apparatus of the conveying equipment carries the target articles, where the accommodating apparatus includes a plurality of accommodating positions, the accommodating positions being vertically stacked interlayers, each of the interlayers can accommodate at least one target article. Each interlayer of the accommodating apparatus may also be provided with an interlayer ID identifier, through which the conveying equipment may determine which interlayer of the accommodating apparatus the height of the article gripping apparatus reaches, and thus can place the target article in the predetermined interlayer of the accommodating apparatus.

S403: the conveying equipment carrying the target articles automatically moves to the target work station, so that the staff or mechanical arm in the target work station picks goods from the target articles.

In the target work station, the staff or mechanical arm grips the goods from the target articles, the goods is the picked goods. The gripped goods may be put into an order container, and the goods in an order container may be the goods of an order.

S404: the conveying equipment carrying the target articles automatically moves to the target article storage apparatus.

As a case, the article conveying task received by the conveying equipment may instruct to convey multiple target articles, and the conveying equipment acquires multiple target articles from one or more article storage apparatus according to the walking path plan.

It can be understood that, in addition to the sorting scenario, the conveying equipment may also be applied to the replenishment method in the replenishment scenario. Here, in S403, the staff or mechanical arm located in the target work station puts the goods into the target articles, where the goods are the goods to be replenished into the target articles.

In the sorting method, the conveying equipment is automatically transported to the preset destination through the walking apparatus, and one or more accommodating positions arranged on the conveying equipment can carry and convey the target articles gripped by the article gripping apparatus. Compared with the traditional method of conveying the entire shelf, the conveying equipment can selectively grip a certain storage container loaded with goods or certain goods on the shelf to be conveyed instead of the entire shelf, thereby improving the hit rate of article sorting.

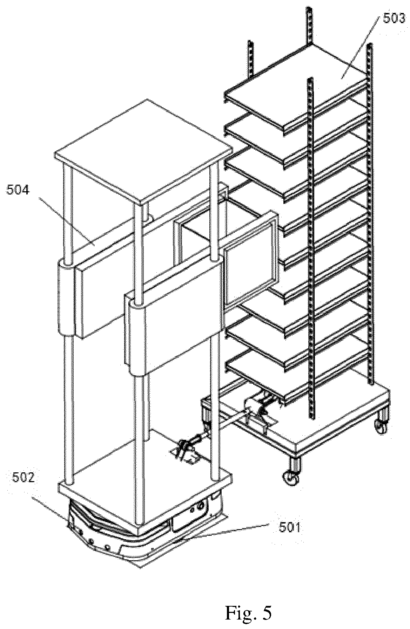

Referring to Fig. 5, which is not according to the invention, a robot is provided (for example, a conveying equipment, which will be used for description hereafter) including a walking apparatus 501, a body 502, an accommodating apparatus 503 and an article gripping apparatus 504.

The walking apparatus 501 is a motion component of the conveying equipment. As an example, the walking apparatus 501 may include one or more wheels, and move the conveying equipment by rolling of the wheels. The walking apparatus 501 may be arranged at the bottom of the conveying equipment. In an embodiment, the walking apparatus 501 may alternatively be arranged at other parts of the conveying equipment.

The conveying equipment can communicate with the back-end server, where the communication method may be wired or wireless. By communicating with the back-end server, the conveying equipment can be informed of the conveying task of the article, where the conveying task includes the walking path (which contains one or more coordinate points) assigned to the conveying equipment and the specific ID identifier of the target article (for example, article number, etc.). The walking apparatus 501 automatically proceeds to a preset position based on the walking path of the conveying equipment, where the preset position may be the location of the target article or the location of the work area or the like. The staff in the work area can pick the target articles.

The body 502 is an integral support member of the conveying equipment. As a case, the body 502 is arranged over the walking apparatus 501, and the body 502 is configured to support the article gripping apparatus 504.

In order to facilitate conveying the articles, the body 502 on the conveying equipment is connected with an accommodating apparatus 503, the accommodating apparatus 503 including a plurality of accommodating positions, for example, the accommodating positions are the vertically stacked interlayers, each of the interlayers can accommodate at least one target article.

The bottom of the accommodating apparatus 503 is provided with scroll wheels, so that when the walking apparatus 501 moves, the accommodating apparatus 503 may move with the walking apparatus 501. In an optional solution, a scroll wheel is provided at each of four corners at the bottom of the accommodating apparatus 503.

After the walking apparatus 501 transports the conveying equipment to the preset position, the article gripping apparatus 504 automatically grips the target article. For example, in the sorting scenario, the article gripping apparatus 504 grips the target article from the article storage apparatus corresponding to the preset position and automatically places the gripped target article in the accommodating position of the accommodating apparatus 503 (e.g., on any interlayer in the accommodating apparatus) based on the article gripping task received by the conveying equipment. For example, in the replenishment scenario, the article gripping apparatus 504 grips the target article from the accommodating position of the accommodating apparatus 503 (e.g., any interlayer in the accommodating apparatus) and places the gripped target article in the article storage apparatus corresponding to the preset position based on the article gripping task received by the conveying equipment.

As a case, the article conveying task received by the conveying equipment may instruct to convey multiple target articles, and the conveying equipment acquires multiple target articles from one or more article storage apparatus according to the walking path, where the walking path may be notified to the conveying equipment after being planned by the back-end server, or may be determined by the conveying equipment after being planned by itself.

The article storage apparatus may be any apparatus capable of storing articles. As an example, referring to Fig. 2, the article storage apparatus may be a shelf 2. The shelf 2 stores articles 3. In an embodiment, the shelf 2 includes a plurality of interlayers, each of the interlayers can accommodate one or more articles 3. The article 3 may be a product on the shelf or a storage container that can hold one or more products on the shelf.

Furthermore, in an embodiment, the article 3 may also be hung from a hook or a rod in or on the shelf 2. The article 3 can be placed on the inner or outer surface of the shelf on the shelf 2 in any suitable manner. The shelf 2 can be rolled, carried or conveyed in other manners by the conveying equipment. In order to facilitate the conveying equipment to convey the shelf 2, the shelf 2 includes one or more shelf supports and a shelf identification point for identifying the shelf identity, and the article storage system may include any suitable number of shelves.

The article 3 represents any article suitable for storing, sorting or transferring in an automated inventory, warehouse, manufacturing or part processing system, may be any material, and may be a living or inanimate object. As an example, the article 3 may represent a commodity stored in the warehouse. The conveying equipment may retrieve the designated shelf 2 that contains the specific article 3 associated with the customer order to be packaged for delivery to the customer or other party.

As another example, the article 3 may represent the luggage stored in the luggage facility at the airport. The conveying equipment may retrieve the shelf 2 containing the luggage to be transported and tracked. This may include: selecting specific luggage articles for explosive screening, moving the luggage articles associated with flights that have switched gates, or removing the luggage articles belonging to the passengers who have missed flights.

As yet another example, the article 3 may represent each component of the manufacturing kit. In an embodiment, these components may represent components intended to be included in an assembled product, e.g., computer components used to customize a computer system. In such an embodiment, the conveying equipment may retrieve the specific components identified by the specifications related to the customer's order.

As yet another example, the article 3 may represent a person. For example, in the hospital environment, the shelf 2 may represent a bed containing a specific patient. Therefore, the article storage system may be configured to provide a safe and effective system for moving the hospital beds, which limits the possibility of patient injuries and reduces the possibility of errors due to human error. In short, the article 3 may be any suitable article suitable for storage on the shelf 2 in any suitable form.

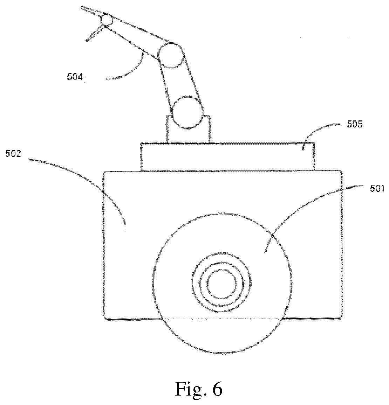

The article gripping apparatus 504 may be implemented in various ways. Referring to Figs. 5 and 6, which are not according to the invention, according to an implementation of the present disclosure, the article gripping apparatus 504 includes a telescopic component that grip the target article from the article storage apparatus. In order to cooperate with the telescopic component, the article gripping apparatus 504 may further include a telescopic support configured to support the telescopic component.

The heights of the target articles in the article storage apparatus are often different. In order to be able to place the target articles with different heights in the accommodating positions, according to an implementation of an embodiment of the present application, the article gripping apparatus 504 includes a lifting component that raises or lowers the telescopic component to the height matching with the target article, where the lifting component may be any apparatus capable of lifting the height. As an optional embodiment, the lifting component may be a linear bearing.

The telescopic component may grip the articles in various ways. Referring to Fig. 5, according to a specific implementation of the present disclosure, the telescopic component includes a clamping part that grip the target article from the article storage apparatus or grip the target article from the accommodating position of the accommodating apparatus by way of clamping. The telescopic component further includes a sliding part connected to the clamping part, where the clamping part slides in the depth direction of the interlayers through the sliding part. As an optional embodiment, the sliding part may be a guide rail.

According to an implementation of the present disclosure, the clamping part includes two grippers: a first gripper and a second gripper, which are oppositely arranged on left and right sides of the interlayers. The two grippers may be plate-like structures or other shapes, such as rod-like structures. The shape of the plate-like structure may be rectangular (including square), circular or other shapes. The heights of the first gripper and the second gripper may match with the height of the interlayer. In an implementation, both the height of the first gripper and the height of the second gripper are not higher than the height of the interlayer.

The clamping part further includes fasteners arranged respectively inside the first gripper and the second gripper, where the fasteners are foldable, the fasteners are folded when the clamping part does not grip the target article, and the fasteners expand when the clamping part grips the target article. The fasteners are configured to fasten the target article when the target article is gripped, to prevent the target article from sliding down between the first gripper and the second gripper.

In addition to gripping the target article by way of clamping, according to another implementation of the present disclosure, the telescopic component includes a gripper part that grips the target article from the article storage apparatus or grips the target article from the accommodating position of the accommodating apparatus by way of grippers. The gripper part is set to be in the contracted state when the conveying equipment does not perform the task, and is set to be in the open state when performing the task. According to another implementation of the present disclosure, the lifting component performs the contraction/expansion operation based on the height of the target article. When the lifting component performs the expansion operation, the lifting component raises the height; and when the lifting component performs the contraction operation, the lifting component lowers the height.

According to another implementation of the present disclosure, the telescopic component includes a fork part that grips the target article from the article storage apparatus corresponding to the preset position by way of forking. The fork part may be implemented by using a variety of mechanical structures with the forking function, which will not be repeated here.

In the process of gripping articles, the article gripping apparatus 504 can adjust the posture based on the actual needs. Referring to Fig. 6, which is not according to the invention, according to an implementation of the present disclosure, the conveying equipment further includes: a rotating component 505 on which the article gripping apparatus 504 are arranged. By the rotating component 505, the article gripping apparatus 504 may be oriented towards a preset direction, such as the accommodating apparatus 503 or the article storage apparatus. For example, in the sorting scenario, the article gripping apparatus 504 is oriented towards the article storage apparatus through the rotating component 505, and grips an article from the article storage apparatus; and then the article gripping apparatus 504 is oriented towards the accommodating apparatus 503 through the rotating component 505, and places the gripped article in any accommodating position (e.g., in any interlayer) of the accommodating apparatus 503, where each interlayer can accommodate one or more articles.

According to an implementation of the present disclosure, during the movement of the conveying equipment from the starting point of the task to the preset position, the lifting component and the rotating component automatically adjust to the postures matching with gripping the target article. In this way, the conveying equipment can automatically adjust the posture before gripping the target article, reducing the time of gripping the target article.

As an example, when extracting the target article (e.g., goods), the conveying equipment walks to a predetermined position by scheduling. During the walking process, the rotating component and the lifting component work together to rotate the shelf on the conveying equipment by 90°. The rotation direction of the shelf depends on the position direction of the gripped goods, and the lifting height of the lifting component depends on the position height of the gripped goods. Then the telescopic component works and extends, and extends the clamping part to the cooperative position corresponding to the material box of the gripped goods. Then the clamping part clamps the material box for placing the goods, and then the lifting component work to lift the material box of the article, and the telescopic component works and puts the article on the shelf interlayer with the height corresponding to the goods quickly. Then the conveying equipment receives the system instruction and starts to go to the next place. The rotating component 505 works while the conveying equipment is walking, so that the forward direction of the shelf is consistent with the forward direction of the conveying equipment, and then one or more components work to place the material box for placing the goods on the shelf interlayer scheduled by the system. During this process, the conveying equipment is on the way to the next pickup location.

The article gripping apparatus 504 of the present disclosure may take out two or more target articles and place them on the article storage apparatus, and then transport multiple target articles together to the designated location, maximizing the efficiency.

Regarding the robot (i.e., conveying equipment) provided by the present disclosure, the robot is automatically transported to the preset destination through the walking apparatus, and the accommodating apparatus (which includes one or more accommodating positions) of the robot can carry and convey the target article gripped by the article gripping apparatus. Compared with the traditional method of conveying the entire shelf, the robot can selectively grip a certain storage container or certain goods on the shelf to be conveyed instead of the entire shelf, thereby improving the hit rate of article sorting.

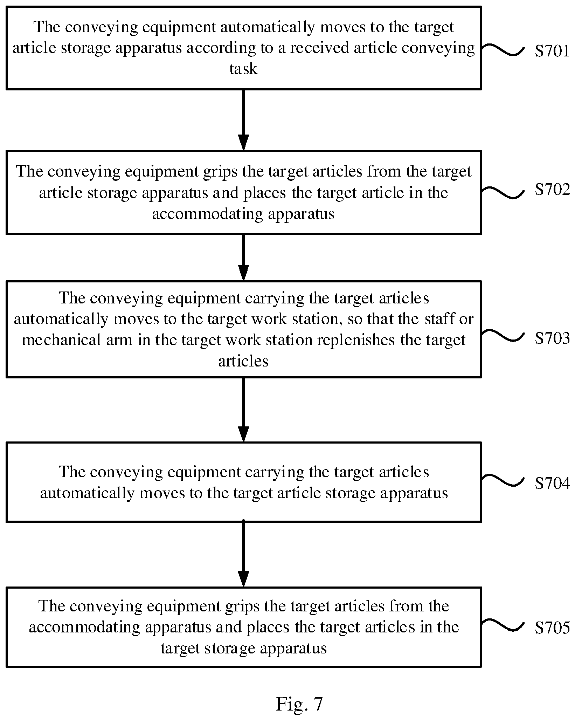

Referring to Fig. 7, which is not according to the invention, by using the conveying equipment (i.e., robot), the present disclosure provides a replenishment method based on the replenishment scenario, including the following steps.

S701: the conveying equipment automatically moves to the target article storage apparatus according to a received article conveying task.

S702: the conveying equipment grips the target articles from the target article storage apparatus and places the target article in the accommodating apparatus.

Here, the target article may be a storage container. The conveying equipment can communicate with the back-end server, where the communication method may be wired or wireless. By communicating with the back-end server, the conveying equipment can be informed of the conveying task of the article, where the conveying task includes a walking path (which contains one or more coordinate points) assigned to the conveying equipment and the specific ID identifier of the target article (for example, article number, etc.). The conveying equipment identifies the target article to be gripped from the target article storage apparatus according to the ID identifier of the target article, and grips the target article. In addition, each interlayer of the target article storage apparatus may be provided with an interlayer ID identifier. According to the interlayer ID identifier, the conveying equipment may further determine which interlayer of the target article storage apparatus the height of the article gripping apparatus reaches, and thus can grip the target article from the predetermined interlayer of the target article storage apparatus. Therefore, in this case, the article conveying task also includes the interlayer ID identifier.

The accommodating apparatus of the conveying equipment carries the target articles, where the accommodating apparatus includes a plurality of accommodating positions, the accommodating positions being vertically stacked interlayers, each of the interlayers can accommodate at least one target article. Each interlayer of the accommodating apparatus may also be provided with an interlayer ID identifier, through which the conveying equipment may determine which interlayer of the accommodating apparatus the height of the article gripping apparatus reaches, and thus can place the target article in the predetermined interlayer of the accommodating apparatus.

S703: the conveying equipment carrying the target articles automatically moves to the target work station, so that the staff or mechanical arm in the target work station replenishes the target articles.

In the target work station, the staff or mechanical arm places the goods in the target articles, where the goods are the goods to be replenished onto the target article storage apparatus.

S704: the conveying equipment carrying the target articles automatically moves to the target article storage apparatus.

S705: the conveying equipment grips the target articles from the accommodating apparatus and places the target articles in the target storage apparatus.

As a case, the article conveying task received by the conveying equipment may include conveying multiple target articles, and the conveying equipment acquires multiple target articles from one or more article storage apparatus by making the walking path plan.

It can be understood that, in addition to the replenishment scenario, the conveying equipment may also be applied to the sorting method in the sorting scenario. Here, in S703, the staff or mechanical arm grips the goods from the target articles, where the goods are the picked goods. The gripped goods may be put into an order container, and the goods in an order container may be the goods of an order.

When the conveying equipment moves to the target work station, it may be achieved in the following ways: a. if the target article storage apparatus has the target articles, the conveying equipment grips one or more target articles from the target article storage apparatus and then runs to the target work station; b. if there are target articles in the target work station, the conveying equipment grips some target articles from the target article storage apparatus (the target article storage apparatus has the target articles) or is empty (the target article storage apparatus has no target article) and runs to the target work station, where the target article may be a storage container, and the storage container may be any device used to place goods. For example, the storage container may be a packaging box, a packaging bag, or a container, or the like.

After the conveying equipment arrives at the designated position, the conveying equipment places the goods in the target articles, which may be achieved in the following ways: a. if the conveying equipment carries all or a part of the target articles, an operator, an operating robot (such as parallel robot, mechanical arm with 6 degrees of freedom, or other operating robots) or other automated equipment places the goods into the target articles; b. if the conveying equipment does not carry the target articles or carries a part of the target articles, an operator, an operating robot (such as parallel robot, mechanical arm with 6 degrees of freedom, or other operating robots) or other automated equipment stores the goods to the target articles, and places the target articles in a storage position of the storage container.

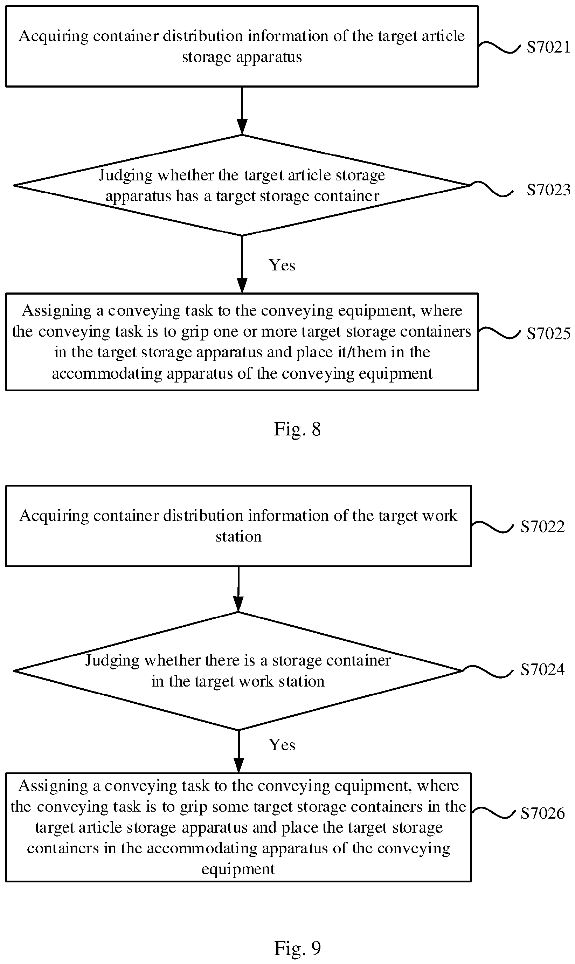

In the process of implementing S702, referring to Fig. 8, which is not according to the invention, according to an implementation of the present disclosure, application, the back-end server allocates the corresponding container conveying strategy to the conveying equipment based on the container distribution of the target article storage apparatus and the target work station, which may include the following steps.

S7021: acquiring container distribution information of the target article storage apparatus.

The storage container may be provided with a number (for example, a two-dimensional code or a barcode) or a tag (for example, a Radio Frequency Identification (RFID) tag) or the like, and the number or tag on the storage container may be read correspondingly by a camera or tag sensor to thereby obtain the distribution information of storage containers (e.g., the type and number of storage containers, etc.) in the target article storage apparatus.

S7023: judging whether the target article storage apparatus has a target storage container.

The back-end server obtains the number of remaining storage containers by querying the storage container number information, and then judges whether the target article storage apparatus still has a target storage container.

S7025: assigning a conveying task to the conveying equipment if the target article storage apparatus has a target storage container, where the conveying task is to grip one or more target storage containers in the target storage apparatus and place it/them in the accommodating apparatus of the conveying equipment.

When the back-end server queries that the target article storage apparatus still has a target storage container, the conveying task assigned to the conveying equipment may carry the number of the target storage container, and the conveying equipment can automatically move to the target article storage apparatus and identify the target storage container according to the number, and automatically place the target storage container in the accommodating apparatus of the conveying equipment.

Through the above-mentioned multiple steps, the conveying equipment can automatically select and convey the storage container to the target work station, and the operating object (mechanical arm, person, etc.) in the target work station can place the goods directly in the storage container, improving the efficiency of loading the goods.

In the process of implementing S702, referring to Fig. 9, which is not according to the invention, according to another implementation of the present disclosure, the allocation of the corresponding container conveying strategy to the conveying equipment based on the container distribution of the target article storage apparatus and the target work station includes the following steps.

S7022: acquiring container distribution information of the target work station.

The storage container may be provided with a number (for example, a two-dimensional code or a barcode) or a tag (for example, RFID tag) or the like, and the number or tag on the storage container may be read correspondingly by a camera or tag sensor to thereby obtain the distribution information of storage containers (e.g., the type and number of storage containers, etc.) in the target work station.

S7024: judging whether there is a storage container in the target work station.

The back-end server obtains the number of remaining storage containers by querying the storage container number information, and then judges whether the target work station has a target storage container.

S7026: assigning a conveying task to the conveying equipment if there is a storage container in the target work station, where the conveying task is to grip some target storage containers in the target work station and place the target storage containers in the accommodating apparatus of the conveying equipment.

Alternatively, the conveying task may also be to keep the conveying equipment empty. Since there has already been some storage containers in the target work station, as a case, the goods in the storage containers in the target work station can be consumed at first. At this time, the conveying equipment may be controlled to accommodate and convey other storage containers, or may be controlled not to convey the storage containers and be empty. After all the goods in the storage containers in the target work station are consumed, the storage containers are conveyed and the goods are restocked by performing S702-S705.

Through the above steps, the storage containers in the target working position are consumed at first, improving the use efficiency of the storage containers.

The conveying equipment (i.e., robot) has the function of moving the target article up and down. In order to facilitate the sorting or replenishment operation, the conveying equipment can move the target article to the interlayer height easy to operate, and the operator, the operating robot (such as parallel robot, mechanical arm with 6 degrees of freedom, or other operating robots) or other automated equipment can be relatively convenient to replenish or pick the target article.

The conveying equipment can place the target article in a fixed position, and the operator, operating robot or other automated equipment can pick or replenish the target article in the fixed position.

The conveying equipment can take down the target articles from the accommodating apparatus and place them on the transfer equipment such as transmission line. The operator, operating robot or other automated equipment sorts or replenishes the target articles on the transfer equipment such as transmission line; or the operator, operating robot or other automated equipment takes down the target articles from the transfer equipment such as transmission line and performs the sorting or replenishment, and puts the target articles back onto the transfer equipment such as transmission line after the sorting or replenishment ends. Finally the conveying equipment grips the target articles after being sorted or replenished from the transfer equipment such as transmission line.

The target articles, the goods corresponding to the target articles, and accommodating position information of a part or all of the target articles in the conveying equipment are bound to thereby form the corresponding information, and the corresponding information is stored in the back-end server or conveying equipment or database to thereby form the basic information used for subsequent operations.

The articles, with at least one item of high heat or large shipment, are placed in an article storage apparatus closer to the work station; the articles, with at least one item of low heat or few shipment, are placed in an article storage apparatus farther from the work station, thereby reducing the conveying distance of the conveying equipment. The articles with higher pairing probability may be placed in the adjacent article storage apparatus, thereby increasing the probability of pairing hits in the future when out of the warehouse. The sorting efficiency is increased by reducing the walking distance of the conveying equipment.

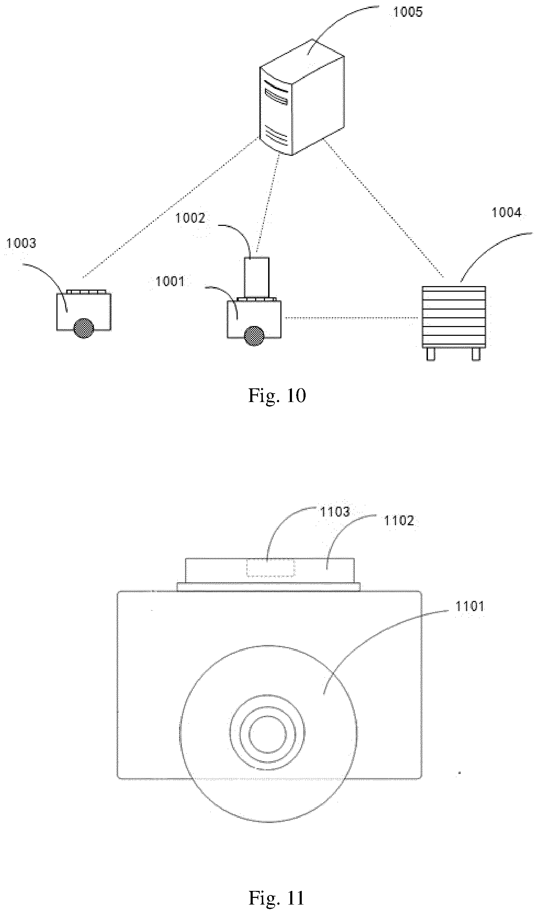

Referring to Fig. 10, an embodiment of the present invention provides a conveying system based on a storage container and temporary shelf, the conveying system including: a first robot 1001, a storage container 1002, a second robot 1003, a temporary shelf 1004, and a control server 1005.

The storage container 1002 is configured to store the articles to be sorted or to be replenished, and the storage container 1002 may be, for example, a carton, a turnover box, or a customized container that may be adapted for the robot operation. The storage container 1002 can be placed on the temporary shelf 1004 or a carrying apparatus (for example, a conveyor belt), and the storage container 1002 can store one or more articles. In an embodiment, the temporary shelf 1004 may be understood as a temporary buffer apparatus.

The first robot 1001 can communicate with the control server 1005, and the first robot 1001 can obtain the form content by communicating with the control server 1005. The form content may be an order of articles sorted according to the user demands, and the form may contain one or more different types of articles (articles to be sorted). The articles to be sorted on the same form are to be packaged by one or more appliances. The articles corresponding to the form are usually placed using the storage container 1002. After acquiring the content of the form, the first robot 1001 can grip the storage container 1002 related to the articles in the form from the storage shelf. In an embodiment, the storage shelf may be understood as an article storage apparatus.

The temporary shelf 1004 may store one or more storage containers. For example, the temporary shelf 1004 includes a plurality of vertically stacked interlayers, each of the interlayers can accommodate at least one storage container 1002. In the sorting scenario, the temporary shelf 1004 is configured to store the storage container 1002 that the first robot 1001 takes out from the storage shelf, where the articles in the storage container 1002 are the articles to be sorted; and in the replenishment scenario, the temporary shelf 1004 stores the storage container 1002 to be replenished to the storage shelf, where the articles in the storage container 1002 are the articles to be replenished. The temporary shelf 1004 corresponds to the form. One form may correspond to one or more temporary shelves 1004, or one or more forms may correspond to one temporary shelf 1004.

The temporary shelf 1004 may have or may not have wheels. If the temporary shelf 1004 has no wheels, then the temporary shelf 1004 is located on the second robot 1003. If the temporary shelf 1004 has wheels, then the second robot 1003 may drag the temporary shelf with wheels.

By setting the temporary shelf, the articles related to the form can be placed directly in a collection. In this way, all the storage containers on the temporary shelf 1004 are the objects to be sorted. After the temporary shelf 1004 is transported to the designated place (for example, workbench), the article sorting efficiency is greatly improved.

The second robot 1003 moves following the first robot 1001 and conveys the temporary shelf in the following process, where the first robot 1001 moves according to the navigation path, and the second robot 1003 may automatically track the first robot 1001 based on the lidar target tracking technology. The second robot 1003 follows wherever the first robot 1001 goes. Alternatively, the first robot 1001 and the second robot 1003 move respectively according to the same navigation path. Of course, the end position of the navigation path of the first robot 1001 and the end position of the navigation path of the second robot 1003 are not completely the same, but are adjacent positions.

The first robot 1001 and the second robot 1003 may use any navigation method for navigation, e.g., two-dimensional code visual navigation, inertia navigation, Simultaneous Localization and Mapping (SALM) navigation or line patrol navigation, etc., or may use any combination of multiple navigation methods for navigation, e.g., two-dimensional code visual navigation combined with inertia navigation or two-dimensional code visual navigation combined with SLAM navigation. The technical solutions in the embodiments of the present invention do not specifically limit the navigation mode.

For the sake of simplicity, Fig. 10 only shows the case of a single first robot 1001 and a single second robot 1002, but the conveying system may include any suitable number of first robots 1001 and second robots 1002. For example, multiple second robots 1003 follow one first robot 1001, or one second robot 1003 follows multiple first robots 1001.

Referring to Fig. 11, the second robot 1003 may include a drive mechanism 1101. By the drive mechanism 1101, the second robot 1003 can move in the work space. The second robot 1003 may further include a lifting mechanism 1102 configured to convey temporary shelves. When the lifting mechanism 1102 rises, the temporary shelf is lifted from the ground, so that the second robot 1003 conveys the temporary shelf 1002; and when the lifting mechanism 1102 goes down, the temporary shelf 1002 is placed on the ground. In an embodiment, the lifting mechanism 1102 is optional, the second robot 1003 may not include the lifting mechanism 1102, and the temporary shelf 1002 is placed on the body of the second robot 1003. The target recognition component 1103 on the second robot 1003 can effectively recognize the temporary shelf 1002 when the second robot 1003 lifts the temporary shelf 1002.

In addition, if it is based on the visual navigation, the second robot 1003 further includes a navigation recognition component (not shown in Fig. 11) configured to recognize the navigation mark (such as two-dimensional code) on the ground. In an embodiment, the second robot 1003 further includes a control module (not shown in Fig. 11) that controls the entire second robot 1003 to implement the movement, navigation and other functions. The second robot 1003 may further include a tracking mechanism (not shown in Fig. 11). For example, the tracking mechanism may track the first robot 1001 based on the lidar target tracking technology.

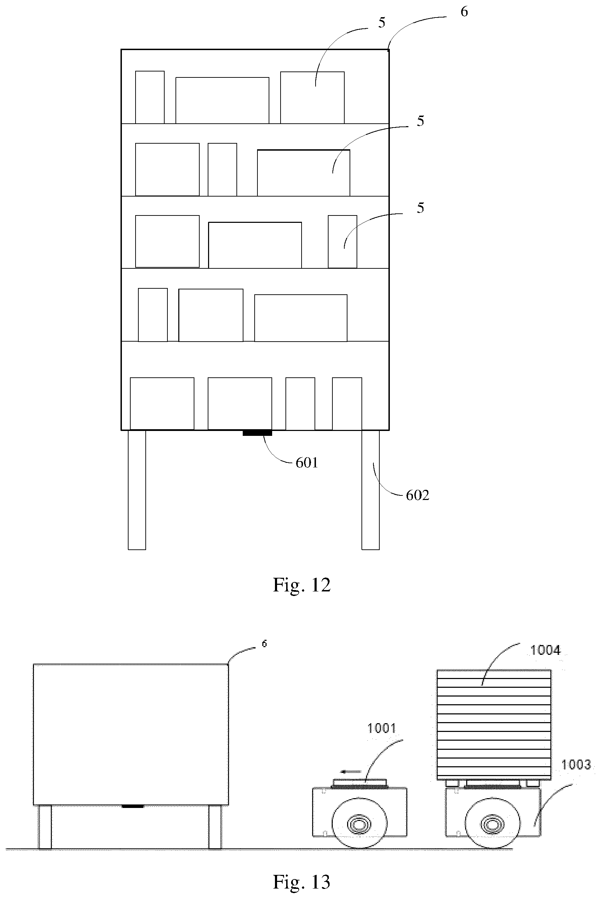

Fig. 12 is a schematic diagram of a storage shelf 6 provided by an embodiment of the present invention. The storage shelf 6 stores articles 60. Of course, the articles 60 may also be stored in storage containers. In an embodiment, the storage shelf 6 includes a plurality of vertically stacked interlayers, each of which can accommodate a plurality of articles 60. The storage shelf 6 includes one or more supports 602.

In an embodiment, the article 60 may also be hung from a hook or a rod in or on the storage shelf 6. The article 60 can be placed on the inner or outer surface of the storage shelf 6 in any suitable manner on the storage shelf 6.

In order to facilitate the first robot 1001 to pick the storage container on the storage shelf 6, each interlayer on the storage shelf 6 has a marking point (not shown in Fig. 12) for identifying the interlayer, and the first robot 1001 determines which interlayer the gripping apparatus rises up to according to this marking point.

The storage relationship between the temporary shelf 1004 and the storage container may also be seen in Fig. 13, wherein the temporary shelf 1004 can be dragged, carried, or otherwise moved by the second robot 1003. In order to facilitate the temporary shelf 1004 to be lifted by the second robot 1003, a shelf identifier 601 is provided at the bottom of the temporary shelf. After identifying the temporary shelf 1004 according to the shelf identifier 601, the second robot 1003 raises the temporary shelf 1004 through the lifting mechanism, and conveys the temporary shelf 1004 away.

The article represents any article suitable for storing, sorting or transferring in at least one of: automated inventory, warehouse, manufacturing or part processing system, and the article may be any material and may be a living or inanimate object. As an example, the article may represent a commodity stored in the warehouse.

The first robot 1001 may specify the temporary shelf 1004 that contains the specific article associated with the customer order to be packaged for delivery to the customer or other party.

As another example, the article may represent the luggage stored in the luggage facility at the airport. The first robot 1001 may retrieve the shelf 1002 containing the luggage to be transported and tracked. This may include: selecting specific luggage articles for explosive screening, moving the luggage articles associated with flights that have switched gates, or removing the luggage articles belonging to the passengers who have missed flights.

As yet another example, the article may represent multiple components of the manufacturing kit. In an embodiment, these components may represent components intended to be included in an assembled product, e.g., computer components used to customize a computer system. In such an embodiment, the first robot 1001 may retrieve the specific components identified by the specifications related to the customer's order.

As yet another example, the article may represent a person. For example, in the hospital environment, the temporary shelf 1004 may represent a bed containing a specific patient. Therefore, the article storage system may be configured to provide a safe and effective system for moving the hospital beds, which limits the possibility of patient injuries and reduces the possibility of errors due to human error. In short, the article may be any suitable article suitable for storage on the temporary shelf in any suitable form.

In operation, the first robot 1001 and the second robot 1003 can move between points in the work space associated with the article storage system, and the second robot 3 can convey the temporary shelf 1004 between positions in the work space. Based on the received command, the first robot 1001 may determine the movement destination of the first robot 1001. For example, in an embodiment, the first robot 1001 may receive the information identifying the destination of the first robot 1001 and the intermediate path information from an administrator or management apparatus (e.g., control server 1005) of the article storage system. The first robot 1001 may receive the information through a wireless interface, a wired connection or any other suitable means to facilitate the communication with the operator or management apparatus of the article storage system. Generally, based on the commands from the control management apparatus or the operator, the first robot 1001 may be controlled in whole or in part to any place in need.

As an example, it is assumed in the rest of this specification that the first robot 1001 wirelessly receives the commands, data, instructions, or information constructed in any suitable form. These commands are used to identify the specific temporary shelf 1004, so that the first robot 1001 and the second robot 1003 move to the destination and the second robot 1003 conveys the temporary shelf 1004. The second robot 1003 may move the first robot 1001, the temporary shelf 1004, or a combination of the first robot 1001 and the temporary shelf 1004 through the motor or wheels on the drive module 1101.

In response to the received command, the first robot 1001 moves to the designated storage location (see Fig. 13), e.g., moves to the storage shelf 6, and the second robot 1003 conveys the temporary shelf 1004 and also moves to the storage shelf 6 following the first robot 1001.

The first robot can automatically select the storage container located on the storage shelf 6 or the temporary shelf 1004. As an example, the first robot 1001 has a sorting apparatus that can adjust the sorting direction by rotating so that the sorting apparatus faces to the storage shelf or the temporary shelf.

In addition to the ability of the first robot 1001 to automatically select the storage container on the shelves (including the storage shelf 6 and temporary shelf 1004), for the storage containers already stored on the shelves, the sorting apparatus can further adjust the gripping height. Through the height adjustment, the gripping apparatus grips a storage container located in any interlayer on the storage shelf or temporary shelf, and the gripping apparatus places the storage container in any interlayer on the storage shelf or temporary shelf.

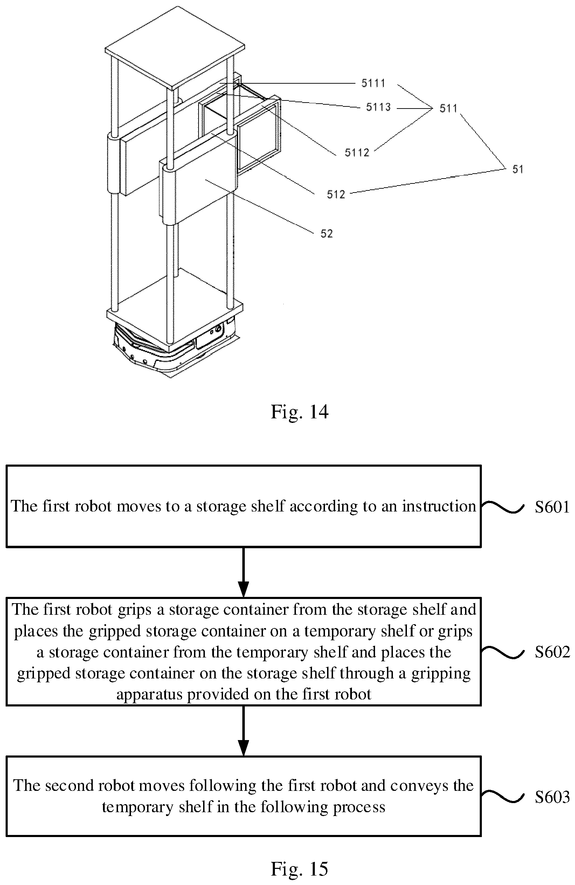

Referring to Fig. 14, Fig. 14 is a schematic diagram of a first robot provided by an embodiment of the present invention. The first robot has a gripping apparatus including a telescopic component 51, the telescopic component 51 is configured to grip a storage container. The gripping apparatus further includes a lifting component 52 that raises or lowers the telescopic component 51 to a preset height.

Here, in an embodiment, the telescopic component 51 includes a clamping part 511 and a sliding part 512. The clamping part 511 grips the storage container from the temporary shelf or the storage shelf by clamping, the clamping part 511 is slidably connected to the sliding part 512, and the clamping part 511 can slide in the depth direction of the shelf interlayers through the sliding part 512.

In an embodiment, the clamping part 511 includes a first gripper 5111 and a second gripper 5112 that are oppositely arranged on left and right sides of the interlayers. The first gripper and the second gripper may be plate-like structures, as shown in Fig. 14, or may be other shapes, such as rod-like structures.

In an embodiment, the clamping part 511 further includes non-slip mats 5113 arranged inside the first gripper 5111 and the second gripper 5112 respectively, where the non-slip mats 5113 are foldable. When clamping part 511 does not grip the storage container, the non-slip mats 5113 are folded; and when clamping part 511 grips the storage container, the non-slip mats 5113 expand.

In an embodiment, the vertical height of the first gripper 5111 and the second gripper 5112 matches with the height of the shelf interlayer, so that the first gripper 5111 and the second gripper 5112 can go deep into the shelf interlayer to grip the storage container on the interlayer.

In an embodiment, the sliding part 512 is a guide rail, and the lifting component 52 is a linear bearing.

The storage container is an independent article storage unit. In order to facilitate the first robot 1001 to know the position of the storage container, the storage container is provided with a container identifier, the container identifier may be a two-dimensional code or another graphic mark similar to the two-dimensional code, or may be RFID or another electronic tag with wireless transmission function similar to the RFID. The first robot 1001 identifies the target storage container through the container identifier, and then performs the corresponding gripping operation on the target storage container.

After the temporary shelf 1002 stores the storage containers corresponding to the form or the temporary shelf is filled up, the second robot 1003 moves to a preset position by itself according to the navigation path, where the preset position may be a position specified by an operator in the system or may be a position determined by the control server 1005.

In the conveying system provided by the embodiments of the present invention, the first robot can selectively grip a certain storage container on the shelf to be conveyed instead of the entire shelf, thereby improving the hit rate of article sorting. Moreover, the gripped storage container is placed on a temporary shelf which is conveyed or dragged by the second robot, so that the first robot can pick a plurality of storage containers at a time, and the second robot conveys or drags them to the designated position at a time, improving the conveying efficiency of the storage containers.

Referring to Fig. 15, an embodiment of the present invention further provides a conveying method based on the storage container and temporary shelf, including the following steps.

S601: the first robot moves to a storage shelf according to an instruction.

S602: the first robot grips a storage container from the storage shelf and places the gripped storage container on a temporary shelf or grips a storage container from the temporary shelf and places the gripped storage container on the storage shelf through a gripping apparatus provided on the first robot.

For example, a second robot that moves following the first robot moves to the storage shelf following the first robot, where the second robot is connected with a temporary shelf.

In an embodiment, the first robot faces to the storage shelf and adjusts the height of the gripping apparatus to the height of the interlayer of the storage shelf where the designated storage container is located; the first robot grips the designated storage container from the storage shelf through the gripping apparatus; the first robot faces to the temporary shelf and adjusts the height of the gripping apparatus to the height of the designated interlayer of the temporary shelf; and the first robot places the designated storage container on the designated interlayer on the temporary shelf through the gripping apparatus.

In an embodiment, the first robot faces to the temporary shelf and adjusts the height of the gripping apparatus to the height of the interlayer of the temporary shelf where the designated storage container is located; the first robot grips the designated storage container from the temporary shelf through the gripping apparatus; the first robot faces to the storage shelf and adjusts the height of the gripping apparatus to the height of the designated interlayer of the storage shelf; and the first robot places the designated storage container on the designated interlayer on the storage shelf through the gripping apparatus.

S603: the second robot moves following the first robot and conveys the temporary shelf in the following process.

For example, in S603, the first robot grips the first storage container from the storage shelf and places the first storage container on the temporary shelf or grips the second storage container from the temporary shelf and places the second storage container on the storage shelf.

In the process of implementing the steps S601-S603, the storage container is configured to store the articles to be sorted or to be replenished, and the storage container may be, for example, a carton, a turnover box, or a customized container that may be adapted for the robot operation. The storage container can be placed on the temporary shelf or storage shelf, and may carry one or more articles.

The first robot 1001 can communicate with the control server 1005, and the first robot 1001 can obtain the form content by communicating with the control server 1005. The form content may be the order of articles sorted according to the user demands, and the form may contain many different types of articles (articles to be sorted). The articles to be sorted on the same form are packaged by one or more appliances. The articles corresponding to the form are usually placed using the storage container 1004. After acquiring the content of the form, the first robot 1001 can grip the storage container 1004 related to the articles in the form from the storage shelf.

When the first robot 1001 grips the storage container from the storage shelf and places the storage container on the temporary shelf (corresponding to the sorting scenario) or grips the storage container from the temporary shelf and places the storage container on the storage shelf (corresponding to the replenishment scenario), the first robot 1001 may place the storage container by the following placement method.
i. The first robot places the storage container to the position with the shortest operating stroke. For example, taking the case of gripping the storage container from the storage shelf and placing the storage container on the temporary shelf as an example, the storage container is placed on the interlayer in the temporary shelf closest to the height of the interlayer of the storage shelf where the storage container is located, and the operation stroke of the first robot is the shortest, where the interlayer height of the storage shelf may be the same as the interlayer height of the temporary shelf.
ii. The first robot places the storage container in any position randomly.
iii. A position on the temporary shelf is allocated for each storage container according to the information of multiple storage containers to be gripped by the first robot, for example, the storage container that is firstly taken out is placed on the first layer (the bottom layer or the top layer) of the temporary shelf, and so on.
iv. A position on the temporary shelf is allocated for a storage container to be gripped by the first robot according to the form or product information corresponding to the storage container, where this position is the most suitable position for sorting at the workstation.
v. A position on the temporary shelf is allocated for a storage container to be gripped by the first robot according to the unloading equipment information corresponding to the storage container, where this position is the most suitable position for unloading by the unloading equipment.
vi. A position on the temporary shelf is allocated for a storage container according to the storage container's own attributes, such as size and weight information, where this position is the position that best matches with the storage container's own attributes.

Of course, if the placement position selected for the storage container in any above way is occupied, the first robot adjusts the position of the storage container on the temporary shelf or the storage shelf, where the adjustment method includes the following.
i. The first robot uses a take-out apparatus to take out the storage container and put the storage container in a new position after the position adjustment;
ii. The first robot may adjust the position of the storage container in situ or during walking.

When the first robot completes the operation of sorting the storage container or the storage positions on the temporary shelf are filled up, the temporary shelf is moved by the second robot to the workstation position to operate the storage container.

The operation performed on the storage container may be: the operator or mechanical arm takes out or puts in the corresponding goods; or the operator or mechanical arm takes out the storage container and transports or transfers the storage container; or the take-out apparatus of the first robot takes out the storage container and place the storage container in the designated position (for example, on another shelf or conveyor).

In the conveying method provided by the embodiments of the present invention, the first robot can selectively grip a certain storage container on the shelf to be conveyed instead of the entire shelf, thereby improving the hit rate of article sorting. Moreover, the gripped storage container is placed on a temporary shelf which is conveyed or dragged by the second robot, so that the first robot can pick a plurality of storage containers at a time, and the second robot conveys or drags them to the designated position at a time, improving the conveying efficiency of the storage containers.

In one embodiment, the term "a/an" should be understood as "at least one" or "one or more", that is, in one embodiment, the number of elements may be one, while in other embodiments, the number of elements may be more than one. The term "a/an" cannot be understood as the limitation on the number.

Although ordinal numbers such as "first", "second", etc. will be used to describe various components, but not limit those components here. This term is only used to distinguish one component from another. For example, the first component may be referred to as the second component, and likewise, the second component may also be referred to as the first component.

In one embodiment, the term "a/an" should be understood as "at least one" or "one or more", that is, in one embodiment, the number of elements may be one, while in other embodiments, the number of elements may be more than one. The term "a/an" cannot be understood as the limitation on the number.

Although ordinal numbers such as "first", "second", etc. will be used to describe various components, but not limit those components here. This term is only used to distinguish one component from another. For example, the first component may be referred to as the second component, and likewise, the second component may also be referred to as the first component.

## Claims

1. A conveying system comprising: a first robot (1001) and a second robot (1003); wherein:
the first robot (1001) is configured to move to an article storage apparatus, grip a first target article at the article storage apparatus and place the first target article on a movable temporary buffer apparatus or grip a second target article on the movable temporary buffer apparatus and place the second target article on the article storage apparatus; and
the second robot (1003) is connected to the temporary buffer apparatus and moves following the first robot;
wherein the first robot comprises a gripping apparatus configured to adjust a gripping height to grip the first target article located in any interlayer on the article storage apparatus or the second target article located in any interlayer on the temporary buffer apparatus, and place the first target article in any interlayer of the temporary buffer apparatus or place the second target article in any interlayer of the article storage apparatus;
the gripping apparatus comprises a telescopic component (51) configured to grip the first target article or the second target article and a lifting component (52) connected to the telescopic component and configured to raise or lower the telescopic component to a preset height;
wherein
the telescopic component comprises a clamping part (511) and a sliding part (512), the clamping part being slidably connected to the sliding part;
the clamping part (511) is configured to grip the second target article from the temporary buffer apparatus or grip the first target article from the article storage apparatus by way of clamping, wherein the clamping part (511) slides in a depth direction of interlayers of the temporary buffer apparatus or the article storage apparatus through the sliding part (512).

2. The conveying system according to claim 1, wherein the temporary buffer apparatus is located on the second robot (1003), or the second robot (1003) drags the temporary buffer apparatus with wheels.

3. The conveying system according to claim 1 or 2, wherein the first robot (1001) moves according to a navigational walking path, and the second robot (1003) automatically follows the first robot based on a lidar target tracking technology;
or
the first robot (1001) and the second robot (1003) move according to a same navigational walking path respectively.

4. The conveying system according to claim 1, wherein the clamping part (511) comprises a first gripper (5111) and a second gripper (5112), the first gripper and the second gripper being oppositely arranged on left and right sides of the telescopic component.

5. The conveying system according to claim 4, wherein the first gripper (5111) and the second gripper (5112) are both plate-shaped structures.

6. The conveying system according to any one of claims 1-5, wherein the sliding part (512) is a guide rail.

7. The conveying system according to any one of claims 1-6, wherein the first target article comprises a storage container (1002) loaded with goods or the goods itself; and the second target article comprises a storage container loaded with goods or the goods itself.

8. The conveying system of claim 7, wherein the storage container (1002) comprises a container identifier, and the first robot identifies the storage container through the container identifier.

9. A conveying method comprising:
a first robot (1001) moves to an article storage apparatus;
a second robot (1003) that moves following the first robot moves to the article storage apparatus following the first robot, wherein the second robot is connected with a temporary buffer apparatus; and
the first robot (1001) grips a first target article from the article storage apparatus and places the first target article on the temporary buffer apparatus, or grips a second target article from the temporary buffer apparatus and places the second target article on the article storage apparatus;
wherein
the first robot (1001) grips the first target article from the article storage apparatus and places the first target article on the temporary buffer apparatus, comprising: the first robot grips the first target article from the article storage apparatus through a gripping apparatus provided on the first robot and places the first target article on the temporary buffer apparatus; wherein the gripping apparatus comprises a telescopic component (51) configured to grip the first target article or the second target article and a lifting component (52) connected to the telescopic component and configured to raise or lower the telescopic component to a preset height; wherein the telescopic component comprises a clamping part (511) and a sliding part (512), the clamping part being slidably connected to the sliding part;
and
the first robot (1001) grips the first target article from the article storage apparatus through the gripping apparatus provided on the first robot and places the first target article on the temporary buffer apparatus, comprising:
the first robot (1001) faces to the article storage apparatus, and adjusts a height of the gripping apparatus to a height of an interlayer of the article storage apparatus where the first target article is located through the lifting component (52);
the first robot (1001) grips the first target article from the article storage apparatus through the gripping apparatus via the clamping part (51) by way of clamping;
the first robot (1001) faces to the temporary buffer apparatus, and adjusts the height of the gripping apparatus to a height of a designated interlayer of the temporary buffer apparatus through the lifting component (52); and
the first robot (1001) places the first target article on the designated interlayer of the temporary buffer apparatus through the gripping apparatus via the clamping part (51) by way of clamping;
wherein the clamping part slides in a depth direction of interlayers of the temporary buffer apparatus or the article storage apparatus through the sliding part.

## Patentansprüche

1. Fördersystem, umfassend: einen ersten Roboter (1001) und einen zweiten Roboter (1003); wobei:
der erste Roboter (1001) konfiguriert ist, um sich zu einer Artikellagervorrichtung zu bewegen, einen ersten Zielartikel an der Artikellagervorrichtung zu ergreifen und den ersten Zielartikel auf einer beweglichen temporären Puffervorrichtung zu platzieren oder einen zweiten Zielartikel auf der beweglichen temporären Puffervorrichtung zu ergreifen und den zweiten Zielartikel auf der Artikellagervorrichtung zu platzieren; und
der zweite Roboter (1003) mit der temporären Puffervorrichtung verbunden ist und sich dem ersten Roboter folgend bewegt;
wobei der erste Roboter eine Greifvorrichtung umfasst, die so konfiguriert ist, dass sie eine Greifhöhe einstellt, um den ersten Zielartikel, der sich in einer beliebigen Zwischenschicht auf der Artikellagervorrichtung befindet, oder den zweiten Zielartikel, der sich in einer beliebigen Zwischenschicht auf der temporären Puffervorrichtung befindet, zu ergreifen und den ersten Zielartikel in einer beliebigen Zwischenschicht der temporären Puffervorrichtung zu platzieren oder den zweiten Zielartikel in einer beliebigen Zwischenschicht der Artikellagervorrichtung zu platzieren;
die Greifvorrichtung eine Teleskopkomponente (51) umfasst, die konfiguriert ist, um den ersten Zielartikel oder den zweiten Zielartikel zu ergreifen, und eine Hebekomponente (52), die mit der Teleskopkomponente verbunden ist und konfiguriert ist, um die Teleskopkomponente auf eine voreingestellte Höhe anzuheben oder abzusenken;
wobei die Teleskopkomponente ein Klemmteil (511) und ein Schiebeteil (512) umfasst, wobei das Klemmteil verschiebbar mit dem Schiebeteil verbunden ist;
das Klemmteil (511) so konfiguriert ist, dass es den zweiten Zielartikel aus der temporären Puffervorrichtung ergreift oder den ersten Zielartikel aus der Artikellagervorrichtung durch Klemmen ergreift, wobei das Klemmteil (511) in einer Tiefenrichtung von Zwischenschichten der temporären Puffervorrichtung oder der Artikellagervorrichtung durch das Schiebeteil (512) gleitet.

2. Fördersystem nach Anspruch 1, wobei sich die temporäre Puffervorrichtung auf dem zweiten Roboter (1003) befindet oder der zweite Roboter (1003) die temporäre Puffervorrichtung mit Rädern zieht.

3. Fördersystem nach Anspruch 1 oder 2, wobei sich der erste Roboter (1001) gemäß einem navigatorischen Pfad bewegt und der zweite Roboter (1003) dem ersten Roboter automatisch basierend auf einer Lidar-Zielverfolgungstechnologie folgt;
oder
der erste Roboter (1001) und der zweite Roboter (1003) sich jeweils gemäß demselben navigatorischen Pfad bewegen.

4. Fördersystem nach Anspruch 1, wobei das Klemmteil (511) einen ersten Greifer (5111) und einen zweiten Greifer (5112) umfasst, wobei der erste Greifer und der zweite Greifer gegenüberliegend auf der linken und rechten Seite der Teleskopkomponente angeordnet sind.

5. Fördersystem nach Anspruch 4, wobei der erste Greifer (5111) und der zweite Greifer (5112) beide plattenförmige Strukturen sind.

6. Fördersystem nach einem der Ansprüche 1-5, wobei das Schiebeteil (512) eine Führungsschiene ist.

7. Fördersystem nach einem der Ansprüche 1-6, wobei der erste Zielartikel einen mit Waren beladenen Lagerbehälter (1002) oder die Waren selbst umfasst; und der zweite Zielartikel einen mit Waren beladenen Lagerbehälter oder die Waren selbst umfasst.

8. Fördersystem nach Anspruch 7, wobei der Lagerbehälter (1002) eine Behälterkennung umfasst und der erste Roboter den Lagerbehälter über die Behälterkennung identifiziert.

9. Förderverfahren, umfassend:
ein erster Roboter (1001) bewegt sich zu einer Artikellagervorrichtung;
ein zweiter Roboter (1003), der sich dem ersten Roboter folgend bewegt, bewegt sich dem ersten Roboter folgend zu der Artikellagervorrichtung, wobei der zweite Roboter mit einer temporären Puffervorrichtung verbunden ist; und
der erste Roboter (1001) ergreift einen ersten Zielartikel aus der Artikellagervorrichtung und platziert den ersten Zielartikel auf der temporären Puffervorrichtung oder ergreift einen zweiten Zielartikel aus der temporären Puffervorrichtung und platziert den zweiten Zielartikel auf der Artikellagervorrichtung;
wobei der erste Roboter (1001) den ersten Zielartikel aus der Artikellagervorrichtung ergreift und den ersten Zielartikel auf der temporären Puffervorrichtung platziert, umfassend: der erste Roboter ergreift den ersten Zielartikel aus der Artikellagervorrichtung durch eine Greifvorrichtung, die an dem ersten Roboter bereitgestellt ist, und platziert den ersten Zielartikel auf der temporären Puffervorrichtung; wobei die Greifvorrichtung eine Teleskopkomponente (51) umfasst, die konfiguriert ist, um den ersten Zielartikel oder den zweiten Zielartikel zu ergreifen, und eine Hebekomponente (52), die mit der Teleskopkomponente verbunden ist und konfiguriert ist, um die Teleskopkomponente auf eine voreingestellte Höhe anzuheben oder abzusenken; wobei die Teleskopkomponente ein Klemmteil (511) und ein Schiebeteil (512) umfasst, wobei das Klemmteil verschiebbar mit dem Schiebeteil verbunden ist;
und
der erste Roboter (1001) ergreift den ersten Zielartikel aus der Artikellagervorrichtung durch die an dem ersten Roboter bereitgestellte Greifvorrichtung und platziert den ersten Zielartikel auf der temporären Puffervorrichtung, umfassend:
der erste Roboter (1001) ist der Artikellagervorrichtung zugewandt und stellt eine Höhe der Greifvorrichtung auf eine Höhe einer Zwischenschicht der Artikellagervorrichtung, in der sich der erste Zielartikel befindet, durch die Hebekomponente (52) ein;
der erste Roboter (1001) ergreift den ersten Zielartikel aus der Artikellagervorrichtung durch die Greifvorrichtung über das Klemmteil (51) durch Klemmen;
der erste Roboter (1001) ist der temporären Puffervorrichtung zugewandt und stellt die Höhe der Greifvorrichtung auf eine Höhe einer vorgesehenen Zwischenschicht der temporären Puffervorrichtung durch die Hebekomponente (52) ein; und
der erste Roboter (1001) platziert den ersten Zielartikel auf der vorgesehenen Zwischenschicht der temporären Puffervorrichtung durch die Greifvorrichtung über das Klemmteil (51) durch Klemmen;
wobei das Klemmteil durch das Schiebeteil in einer Tiefenrichtung von Zwischenschichten der temporären Puffervorrichtung oder der Artikellagervorrichtung gleitet.

## Revendications

1. Système de convoyage comprenant : un premier robot (1001) et un second robot (1003) ; dans lequel :
le premier robot (1001) est conçu pour se déplacer vers un appareil de stockage d'articles, pour saisir un premier article cible au niveau de l'appareil de stockage d'articles et pour placer le premier article cible sur un appareil tampon temporaire mobile ou pour saisir un second article cible sur l'appareil tampon temporaire mobile et pour placer le second article cible sur l'appareil de stockage d'articles ; et
le second robot (1003) est relié à l'appareil tampon temporaire et se déplace en suivant le premier robot ;
dans lequel le premier robot comprend un appareil de préhension conçu pour ajuster une hauteur de préhension pour saisir le premier article cible situé dans n'importe quelle couche intermédiaire sur l'appareil de stockage d'articles ou le second article cible situé dans n'importe quelle couche intermédiaire sur l'appareil tampon temporaire, et pour placer le premier article cible dans n'importe quelle couche intermédiaire de l'appareil tampon temporaire ou pour placer le second article cible dans n'importe quelle couche intermédiaire de l'appareil de stockage d'articles ;
l'appareil de préhension comprend un composant télescopique (51) conçu pour saisir le premier article cible ou le second article cible et un composant de levage (52) relié au composant télescopique et conçu pour lever ou baisser le composant télescopique à une hauteur prédéfinie ;
le composant télescopique comprenant une partie de serrage (511) et une partie coulissante (512), la partie de serrage étant reliée de manière coulissante à la partie coulissante ;
la partie de serrage (511) est conçue pour saisir le second article cible depuis l'appareil tampon temporaire ou pour saisir le premier article cible depuis l'appareil de stockage d'articles par serrage, la partie de serrage (511) glissant dans une direction de profondeur des couches intermédiaires de l'appareil tampon temporaire ou l'appareil de stockage d'articles par l'intermédiaire de la partie coulissante (512).

2. Système de convoyage selon la revendication 1, dans lequel l'appareil tampon temporaire est situé sur le second robot (1003), ou le second robot (1003) traîne l'appareil tampon temporaire avec des roues.

3. Système de convoyage selon la revendication 1 ou 2, dans lequel le premier robot (1001) se déplace selon un chemin de navigation, et le second robot (1003) suit automatiquement le premier robot sur la base d'une technologie de suivi de cible lidar ;
ou
le premier robot (1001) et le second robot (1003) se déplacent respectivement selon un même chemin de navigation.

4. Système de convoyage selon la revendication 1, dans lequel la partie de serrage (511) comprend une première pince (5111) et une seconde pince (5112), la première pince et la seconde pince étant disposées en regard sur les côtés gauche et droit du composant télescopique.

5. Système de convoyage selon la revendication 4, dans lequel la première pince (5111) et la seconde pince (5112) sont toutes deux des structures tabulaires.

6. Système de convoyage selon l'une quelconque des revendications 1 à 5, dans lequel la partie coulissante (512) est un rail de guidage.

7. Système de convoyage selon l'une quelconque des revendications 1 à 6, dans lequel le premier article cible comprend un conteneur de stockage (1002) chargé de marchandises ou les marchandises elles-mêmes ; et le second article cible comprend un conteneur de stockage chargé de marchandises ou les marchandises elles-mêmes.

8. Système de convoyage selon la revendication 7, dans lequel le conteneur de stockage (1002) comprend un identifiant de conteneur, et le premier robot identifie le conteneur de stockage par l'intermédiaire de l'identifiant de conteneur.

9. Procédé de convoyage comprenant :
un premier robot (1001) qui se déplace vers un appareil de stockage d'articles ;
un second robot (1003) qui se déplace en suivant le premier robot qui se déplace vers l'appareil de stockage d'articles en suivant le premier robot, le second robot étant relié à un appareil tampon temporaire ; et
le premier robot (1001) saisit un premier article cible depuis l'appareil de stockage d'articles et place le premier article cible sur l'appareil tampon temporaire, ou saisit un second article cible depuis l'appareil tampon temporaire et place le second article cible sur l'appareil de stockage d'articles ;
dans lequel le premier robot (1001) saisit le premier article cible depuis l'appareil de stockage d'articles et place le premier article cible sur l'appareil tampon temporaire, comprenant : le fait que le premier robot saisit le premier article cible depuis l'appareil de stockage d'articles par l'intermédiaire d'un appareil de préhension disposé sur le premier robot et place le premier article cible sur l'appareil tampon temporaire ; l'appareil de préhension comprenant un composant télescopique (51) conçu pour saisir le premier article cible ou le second article cible et un composant de levage (52) relié au composant télescopique et conçu pour lever ou baisser le composant télescopique à une hauteur prédéfinie ; le composant télescopique comprenant une partie de serrage (511) et une partie coulissante (512), la partie de serrage étant reliée de manière coulissante à la partie coulissante ;
et
le premier robot (1001) saisit le premier article cible depuis l'appareil de stockage d'articles par l'intermédiaire de l'appareil de préhension prévu sur le premier robot et place le premier article cible sur l'appareil tampon temporaire, comprenant le fait que :
le premier robot (1001) fait face à l'appareil de stockage d'articles et ajuste une hauteur de l'appareil de préhension à une hauteur d'une couche intermédiaire de l'appareil de stockage d'articles où le premier article cible est situé par l'intermédiaire du composant de levage (52) ;
le premier robot (1001) saisit le premier article cible depuis l'appareil de stockage d'articles par l'intermédiaire de l'appareil de préhension via la partie de serrage (51) par serrage ;
le premier robot (1001) fait face à l'appareil tampon temporaire et ajuste la hauteur de l'appareil de préhension à une hauteur d'une couche intermédiaire désignée de l'appareil tampon temporaire par l'intermédiaire du composant de levage (52) ; et
le premier robot (1001) place le premier article cible sur la couche intermédiaire désignée de l'appareil tampon temporaire par l'intermédiaire de l'appareil de préhension via la partie de serrage (51) par serrage ;
dans lequel la partie de serrage coulisse dans une direction de profondeur des couches intermédiaires de l'appareil tampon temporaire ou de l'appareil de stockage d'articles par l'intermédiaire de la partie coulissante.
